# FASCICULE DE BREVET EUROPEEN

(11) **EP 2 966 429 B1**
(45) Date de publication et mention de la délivrance du brevet: **29.03.2017**
(21) Numéro de dépôt: 15175144.3
(22) Date de dépôt: 02.07.2015
(51) Int. Cl.: G01M 3/04, B64C 25/60, F16F 9/36, B64F 5/00

(54) **PROCÉDÉ DE DÉTECTION DE FUITE D'UN JOINT DYNAMIQUE DANS UN ATTERRISSEUR D'AÉRONEF**
VERFAHREN ZUR DETEKTION EINES LECKS EINER DYNAMISCHEN DICHTUNG IN EINEM FAHRWERK EINES LUFTFAHRZEUGS
METHOD FOR DETECTING LEAKAGE OF A DYNAMIC SEAL IN AN AIRCRAFT LANDING GEAR

(30) Priorité: 09.07.2014 FR 1456639
(43) Date de publication de la demande: 13.01.2016
(73) Titulaire: Safran Landing Systems, 78140 Vélizy-Villacoublay (FR)
(72) Inventeur: STEEL, Graeme, Courtice, Ontario L1E 2G2 (CA)
(74) Mandataire: Parzy, Benjamin Alain

(56) Documents cités:
- EP-A1- 0 762 100
- WO-A1-2010/142802
- US-A1- 2008 163 668

## Description

L'invention est relative aux atterrisseurs d'aéronef et plus précisément aux tests de fuite de fluide hydraulique dans lesdits atterrisseurs d'aéronef.

### ARRIERE PLAN DE L'INVENTION

On connaît des tests de fuite de fluide hydraulique dans les atterrisseurs d'aéronef visant à déterminer si le ou les joints d'étanchéité dynamiques présents entre le caisson et la tige coulissante de la jambe d'atterrisseur assurent bien l'étanchéité et ne laissent passer aucun fluide hydraulique vers l'extérieur du caisson de l'atterrisseur, typiquement le long de la tige coulissante, lorsque l'atterrisseur est sous pression. En général, le caisson est muni d'un palier comportant au moins un joint dynamique destiné à frotter sur la tige coulissante, le palier étant arrêté axialement par un écrou d'arrêt muni d'un joint racleur.

Ces tests sont généralement réalisés comme suit :
- mise sous pression dudit atterrisseur avec le fluide hydraulique ;
- arrêt de la mise sous pression de l'atterrisseur ;
- démontage partiel de l'écrou d'arrêt du palier, ce démontage partiel étant indispensable étant donné que le joint racleur peut bloquer la descente d'une coulure issue d'une fuite du moyen d'étanchéité dynamique ;
- inspection de la tige pour vérifier la présence éventuelle de coulures sur celle-ci et donc d'une fuite.

Néanmoins, il a été constaté que le démontage partiel de l'écrou d'arrêt en translation et de son joint racleur pouvait endommager ledit joint racleur, obligeant alors un démontage complet de la jambe de l'atterrisseur pour pouvoir retirer l'écrou d'arrêt et ainsi remplacer son joint racleur. Une telle procédure prend du temps et retarde la mise en service de l'atterrisseur.

Un test de détection de fuites pour un amortisseur hydraulique est également connu des documents EP0762100 et US2008/0163668.

### OBJET DE L'INVENTION

L'invention a pour objet de présenter une procédure de test remplissant les mêmes fonctions que celles de l'art antérieur mais diminuant le risque d'endommagement du joint racleur.

### RESUME DE L'INVENTION

En vue de la réalisation de cet objet, on propose un procédé de détection de fuite d'un joint dynamique d'un atterrisseur d'aéronef comportant au moins :
- un caisson ;
- une tige montée à coulissement dans le caisson ;
- un palier rapporté à une extrémité du caisson pour guider la tige, le palier comportant au moins un coussinet muni d'au moins un joint dynamique agencé de façon à frotter sur la tige pour assurer une étanchéité entre le caisson et la tige, et ainsi délimiter entre le caisson et la tige une chambre remplie de fluide hydraulique, et un écrou d'arrêt en translation du coussinet par rapport au caisson pourvu d'au moins un joint racleur agencé pour racler du fluide hydraulique sur la tige.

Selon l'invention, le procédé comporte l'étape d'installer à la place de l'écrou d'arrêt un écrou de test sans joint racleur, de mettre du fluide hydraulique dans l'atterrisseur sous pression et de vérifier l'existence éventuelle d'une fuite de fluide hydraulique sur une surface externe de la tige.

L'utilisation d'un écrou de test sans joint racleur à la place de l'écrou d'arrêt en translation définitif avec joint racleur permet de réaliser le test de détection de fuite tout en préservant ledit écrou d'arrêt définitif d'un éventuel démontage.

### BREVE DESCRIPTION DES FIGURES

L'invention sera mieux comprise à la lecture de la description qui suit d'un mode particulier de réalisation non limitatif, en référence aux figures des dessins annexés parmi lesquelles :
- la figure 1 est une vue en coupe d'un montage de l'atterrisseur avec l'écrou d'arrêt en translation muni de son joint racleur monté à l'extrémité de l'atterrisseur ;
- la figure 2 est une vue d'ensemble de l'écrou de test ;
- la figure 3a est une vue d'ensemble d'un montage de l'atterrisseur avec l'écrou de test en cours de montage ;
- la figure 3b est une vue en coupe d'un montage de l'atterrisseur avec l'écrou de test monté à la place de l'écrou d'arrêt en translation et de son joint racleur à l'extrémité du caisson.

### DESCRIPTION DETAILLEE DE L'INVENTION

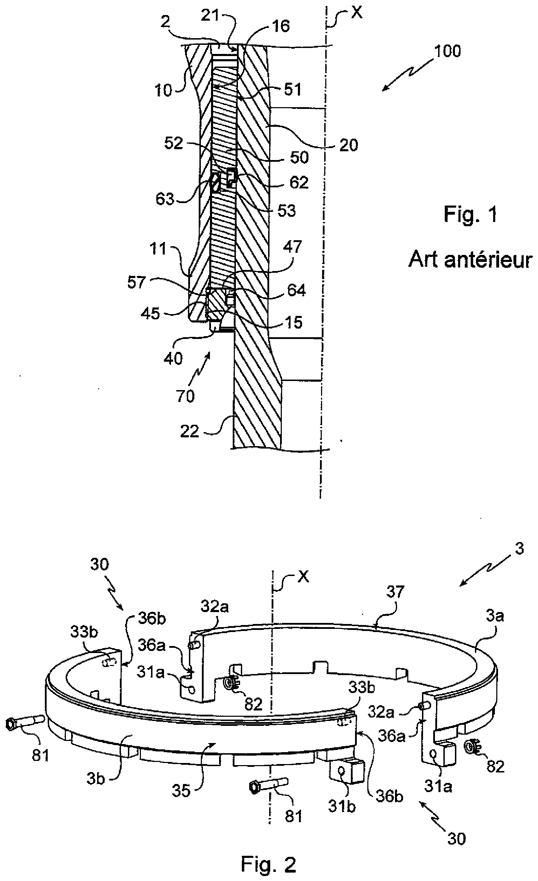

En référence à la figure 1, l'invention concerne un procédé de détection de fuites de fluide hydraulique qui permet de détecter une fuite dans un atterrisseur d'aéronef 100 comportant un caisson 10, une tige 20 montée à coulissement dans le caisson 10 et mobile en translation le long d'un axe X et dont une surface externe 22 reste visible en-dehors du caisson 10. Un palier 70 est rapporté à une extrémité 11 du caisson 10 pour guider la tige 20, le palier 70 comportant ici :
- un coussinet 50 agencé pour qu'une surface cylindrique 51 dudit coussinet 50 coopère avec une surface cylindrique 21 de la tige 20 pour assurer un montage dit « glissant » entre la tige 20 et le caisson 10, la tige 20 pouvant ainsi coulisser le long de l'axe X ;
- au moins un joint d'étanchéité dynamique 62 monté dans un logement 52 du coussinet 50 et agencé de façon à frotter sur la surface cylindrique 21 de la tige 20 pour assurer une étanchéité entre le coussinet 50 et la tige 20, délimitant entre le caisson 10 et la tige 20 une chambre 2 remplie de fluide hydraulique ;
- au moins un joint d'étanchéité 63 monté dans un logement 53 du coussinet 50 et agencé de façon à frotter sur une surface 16 du caisson 10 pour assurer une étanchéité entre ledit caisson et le coussinet 50 ;
- un écrou d'arrêt en translation 40 dont une face 47 est agencée pour entrer en butée avec une face 57 du coussinet permettant d'arrêter en translation le coussinet 50 par rapport à l'extrémité 11 du caisson 10, et muni d'une zone filetée 45 agencée pour coopérer avec une zone filetée 15 de l'extrémité 11, et étant muni d'un joint racleur 64 agencé pour racler du fluide hydraulique sur la surface cylindrique 21 de la tige 20.

Dans un tel montage et lorsque la chambre 2 remplie de fluide hydraulique est sous pression, les éventuelles fuites de fluide hydraulique sont dues à une défaillance du joint d'étanchéité dynamique 62. Dans le cas d'une fuite, ledit joint d'étanchéité dynamique laisse s'écouler du fluide hydraulique de la chambre 2 entre les surfaces cylindriques 21 de la tige 20 et 51 du coussinet 50 jusqu'à l'extérieur du caisson et plus précisément le long de la surface externe 22 de la tige 20.

Dans le cadre d'un test traditionnel de détection de fuite de fluide hydraulique, le montage requis est le même que le montage final, c'est-à-dire qu'il comporte toutes les pièces précitées, y compris l'écrou d'arrêt en translation 40 et son joint racleur 64. Le joint racleur 64 pouvant empêcher le fluide issu d'une fuite de s'écouler à l'extérieur du caisson, le long de la surface externe 22, il est obligatoire de démonter partiellement l'écrou d'arrêt 40 après le test pour vérifier si une coulure n'a pas été arrêtée par le joint racleur 64.

Mais un tel démontage peut conduire à l'endommagement du joint racleur 64. A la place, et conformément au procédé de l'invention, on utilise un écrou de test 3 sans joint racleur qui laisse donc passer une éventuelle fuite de fluide hydraulique.

En référence à la figure 2, on utilise pour réaliser la détection de fuite un écrou de test 3 sans joint racleur divisé en deux demi-cylindres 3a et 3b agencés de façon à être assemblés l'un avec l'autre, grâce à des ensembles de fixation 30. Lesdits ensembles de fixation 30 comportent de façon non limitative des faces 36a et 36b, appartenant respectivement aux demi-cylindres 3a et 3b, agencées de façon à entrer en butée l'une avec l'autre. Des pions 32a appartenant au demi-cylindre 3a coopèrent quant à eux avec des alésages 33b appartenant au demi-cylindre 3b pour assurer le centrage des demi-cylindres 3a et 3b l'un par rapport à l'autre. Le maintien en position de l'écrou de test 3 est assuré par deux ensembles vis-écrou, comportant chacun au moins une vis 81 coopérant avec des alésages 31a et 31b, appartenant respectivement aux demi-cylindres 3a et 3b, et avec un écrou 82. L'assemblage des deux demi-cylindres 3a et 3b crée une seule et même zone filetée 35 agencée de façon à pouvoir monter l'écrou de test 3 à l'extrémité du caisson de l'atterrisseur. L'assemblage des deux demi-cylindres 3a et 3b crée aussi une seule et même face 37 agencée de façon à pouvoir entrer en butée avec le coussinet et ainsi arrêter ledit coussinet en translation.

L'utilisation d'un tel écrou en deux parties, que ce soit pour des tests avant la mise en service d'un atterrisseur d'aéronef ou pour des tests de maintenance évite le démontage de l'ensemble de l'atterrisseur pour réaliser lesdits tests et apporter un précieux gain de temps.

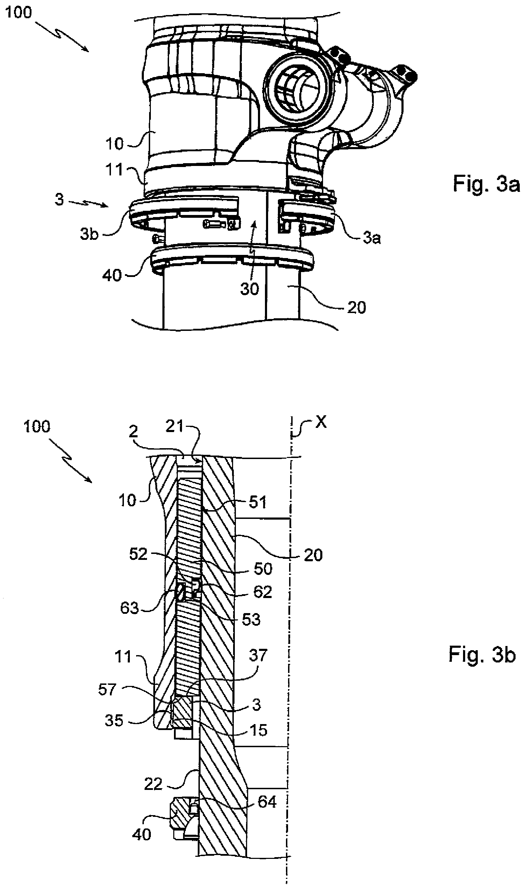

En référence à la figure 3a, le procédé de détection de fuite selon l'invention comporte l'étape de positionner l'écrou de test 3 en assemblant ses deux demi-cylindres 3a et 3b autour de la tige 20, les demi-cylindres étant fixés l'un à l'autre grâce aux ensembles de fixation 30. On notera que l'écrou d'arrêt en translation 40 est déjà monté sur la tige 20 mais est descendu pour permettre la mise en place de l'écrou de test 3.

En référence à la figure 3b, le procédé de détection de fuite selon l'invention comporte l'étape d'assembler les deux demi-cylindres 3a et 3b (non-visibles sur la fig. 3b) l'un avec l'autre pour former l'écrou de test 3 monté à l'extrémité 11 du caisson 10, à la place de l'écrou d'arrêt en translation 40 et de son joint racleur 64. L'écrou de test 3 est maintenu en position par rapport à l'extrémité 11 grâce à sa zone filetée 35 qui coopère avec la zone fileté 15 de l'extrémité 11 du caisson. Une face 37 de l'écrou de test 3 entre en butée avec la face 57 du coussinet 50 remplissant la fonction d'arrêt en translation du coussinet. On notera que l'écrou d'arrêt en translation 40 et son joint racleur 64 sont toujours positionnés sur la tige 20 pendant cette étape.

Toujours en référence à la figure 3b et maintenant que l'écrou de test 3 sans joint racleur est monté à la place de l'écrou d'arrêt en translation 40, la chambre 2 remplie de fluide hydraulique est mise sous pression pendant un temps déterminé.

On inspecte alors la surface externe 22 de la tige 20 pour vérifier si aucune coulure n'y est apparue.

Si aucune fuite n'a été détectée suite à la mise sous pression de la chambre 2 en utilisant l'écrou de test 3, il suffit de retirer ledit écrou de test et de le remplacer par l'écrou d'arrêt en translation 40, déjà monté sur la tige 20.

En revanche, si une fuite de fluide hydraulique a été détectée suite à la mise sous pression, il conviendra de démonter l'atterrisseur afin de remplacer le ou les joints d'étanchéité dynamiques 62 responsables de la fuite.

## Revendications

1. Procédé de détection de fuite d'un joint dynamique d'un atterrisseur d'aéronef (100) comportant au moins :
- un caisson (10) ;
- une tige (20) montée à coulissement dans le caisson ;
- un palier (70) rapporté à une extrémité (11) du caisson pour guider la tige (20), ledit palier comportant au moins un coussinet (50) muni d'au moins un joint d'étanchéité dynamique (62) agencé de façon à frotter sur la tige (20) pour assurer une étanchéité entre le caisson et la tige, et ainsi délimiter entre le caisson et la tige une chambre (2) remplie de fluide hydraulique, et un écrou d'arrêt en translation (40) du coussinet par rapport au caisson pourvu d'au moins un joint racleur (64) agencé pour racler du fluide hydraulique sur la tige ;
**caractérisé en ce qu'**il comporte l'étape d'installer à la place de l'écrou d'arrêt (40) un écrou de test (3) sans joint racleur, de mettre du fluide hydraulique dans l'atterrisseur sous pression et de vérifier l'existence éventuelle d'une fuite de fluide hydraulique sur une surface externe (22) de la tige.

2. Procédé de détection de fuite dans un atterrisseur d'aéronef (100) selon la revendication 1 dans lequel, si une fuite est détectée, on remplace le joint d'étanchéité dynamique (62).

3. Procédé de détection de fuite dans un atterrisseur d'aéronef (100) selon les revendications 1 à 2 dans lequel, si aucune fuite n'est détectée, on remplace l'écrou de test (3) par l'écrou d'arrêt en translation (40).

4. Procédé de détection de fuite dans un atterrisseur d'aéronef (100) selon les revendications 1 à 3 dans lequel l'écrou d'arrêt en translation (40) est préalablement positionné sur la tige (20) et qu'il n'a plus qu'à être monté à l'extrémité (11) du caisson, à la place de l'écrou de test (3).

5. Procédé de détection de fuite dans un atterrisseur d'aéronef (100) selon les revendications 1 à 4 dans lequel l'écrou de test (3) peut être monté et démonté indépendamment des autres pièces de l'atterrisseur d'aéronef.

6. Procédé de détection de fuite dans un atterrisseur d'aéronef (100) selon les revendications 1 à 5 dans lequel l'écrou de test (3) est divisé en deux demi-cylindres (3a;3b) agencés de façon à être assemblés l'un avec l'autre.

## Patentansprüche

1. Verfahren zur Detektion eines Lecks einer dynamischen Dichtung eines Luftfahrzeugfahrwerks (100), mindestens umfassend:
- einen Kasten (10);
- eine Stange (20), die verschiebbar in dem Kasten gelagert ist;
- ein Lager (70), das an einem Ende (11) des Kastens befestigt ist, um die Stange (20) zu führen, wobei das Lager mindestens eine Lagerbuchse (50) umfasst, die mit mindestens einer dynamischen Dichtung (62) versehen ist, die so angeordnet ist, dass sie an der Stange (20) reibt, um eine Abdichtung zwischen dem Kasten und der Stange sicherzustellen und dadurch zwischen dem Kasten und der Stange eine mit Hydraulikfluid gefüllte Kammer (2) zu begrenzen, sowie eine Feststellmutter (40) zum translatorischen Feststellen der Lagerbuchse relativ zum Kasten, die mit mindestens einer Abstreifdichtung (64) versehen ist, die so ausgebildet ist, dass sie Hydraulikfluid auf der Stange abstreift;
**dadurch gekennzeichnet, dass** es den Schritt des Einsetzens einer Testmutter (3) ohne Abstreifdichtung anstelle der Feststellmutter (40), des Unter-Druck-Setzens des Hydraulikfluids in dem Fahrwerk und des Verifizierens des möglichen Vorhandenseins eines Hydraulikfluidlecks auf einer Außenfläche (22) der Stange umfasst.

2. Verfahren zur Detektion eines Lecks in einem Luftfahrzeugfahrwerk (100) nach Anspruch 1, bei dem, wenn ein Leck detektiert wird, die dynamische Dichtung (62) ausgetauscht wird.

3. Verfahren zur Detektion eines Lecks in einem Luftfahrzeugfahrwerk (100) nach den Ansprüchen 1 bis 2, bei dem, wenn kein Leck detektiert wird, die Testmutter (3) durch die Feststellmutter (40) zur translatorischen Feststellung ersetzt wird.

4. Verfahren zur Detektion eines Lecks in einem Luftfahrzeugfahrwerk (10) nach den Ansprüchen 1 bis 3, bei dem die Translationsfeststellmutter (40) zuvor auf der Stange (20) positioniert wird und nur noch anstelle der Testmutter (3) an dem Ende (11) des Kastens montiert werden muss.

5. Verfahren zur Detektion eines Lecks in einem Luftfahrzeugfahrwerk (100) nach den Ansprüchen 1 bis 4, bei dem die Testmutter (3) unabhängig von anderen Teilen des Luftfahrzeugfahrwerks montiert und abmontiert werden kann.

6. Verfahren zur Detektion eines Lecks in einem Luftfahrzeugfahrwerk (100) nach den Ansprüchen 1 bis 5, bei dem die Testmutter (3) in zwei Halbzylinder (3a; 3b) unterteilt ist, die so ausgebildet sind, dass sie zusammengefügt werden können.

## Claims

1. A leak detection method for detecting a leak past a dynamic seal in aircraft landing gear (100) comprising at least:
• a strut (10);
• a rod (20) slidably mounted in the strut; and
• a bearing (70) fitted to an end (11) of the strut to guide the rod (20), said bearing including at least one bushing (50) having at least one dynamic seal (62) arranged to rub against the rod (20) in order to provide sealing between the strut and the rod, thereby defining a chamber (2) filled with hydraulic fluid between the strut and the rod, and a stop nut (40) for preventing the bushing from moving in translation relative to the strut and provided with at least one wiper seal (64) arranged to wipe hydraulic fluid on the rod;
the method being **characterized in that** it includes a step of installing a test nut (3) without a wiper seal in the place of the stop nut (40), the step of putting the hydraulic fluid in the landing gear under pressure, and the step of verifying the existence of a leak, if any, of hydraulic fluid on the outside surface (22) of the rod.

2. A method according to claim 1 for detecting a leak in aircraft landing gear (100), wherein, if a leak is detected, the dynamic seal (62) is replaced.

3. A method according to claim 1 or claim 2 for detecting a leak in aircraft landing gear (100), wherein, if no leak is detected, the test nut (3) is replaced by the stop nut (40) for preventing movement in translation.

4. A method according to any one of claims 1 to 3 for detecting a leak in aircraft landing gear (100), wherein the stop nut (40) for preventing movement in translation is previously positioned on the rod (20) and needs only to be mounted to the end (11) of the strut in order to take the place of the test nut (3).

5. A method according to any one of claims 1 to 4 for detecting a leak in aircraft landing gear (100), wherein the test nut (3) can be fitted and removed independently of the other parts of the aircraft landing gear.

6. A method according to any one of claims 1 to 5 for detecting a leak in aircraft landing gear (100), wherein the test nut (3) is subdivided into two half halfcylinders (3a, 3b) that are arranged to be assembled together.
